# EUROPEAN PATENT APPLICATION

(11) **EP 1 039 379 A2**
(43) Date of publication of application: **27.09.2000**
(21) Application number: 00650021.9
(22) Date of filing: 22.03.2000
(51) Int. Cl.: G06F 9/44

(54) **Method and apparatus for implementing a java TM Based telephony application programming interface**

(30) Priority: 24.03.1999 US 275588
(71) Applicant: Nortel Networks Limited, Montreal, Quebec H2Y 3Y4 (CA)
(72) Inventor: Dykstra, John W., Shoreview, Minnesota 55126 (US); Schweitzer, Timothy G., Maple Grove, Minnesota 55369-6331 (US); Lyell, James M., Garland, Dallas, Texas 75040 (US)
(74) Representative: Coyle, Philip Aidan

(57) **Abstract**

Disclosed is a method and apparatus for simplifying the design effort of creating and debugging a JTAPI (JAVA™ Telephony application programming interface) implementation and the resulting apparatus. The JTAPI is constructed in a multilayer fashion. In one embodiment, a generic portion or layer comprises a large percentage of the required source code and includes a standardized API to an adapter layer which typically comprises a minority portion of total required code for the interface. The generic layer, provides services and mechanisms needed by all JTAPI compliant applications. Its job is to maintain the call model visible to applications through the JTAPI interface, and to dispatch application events upon state changes. The generic layer passes call control requests to the lower level adapter layer, which is responsible for executing the low-level call control requests and reporting back to the generic layer the changes in the state of the telephony hardware. Many of the classes of objects in the generic layer can be created in subclasses of the adapter layer.

## Description

### TECHNICAL FIELD

The present invention relates in general to telephony software and in particular an object oriented application programming interface implementation for use by JAVA™-based computer-telephony applications.

### BACKGROUND

The acronym API refers to an Application Programming Interface. Thus an API may be software that an application program uses to request and carry out lower-level services performed by a computer's or a telephone system's operating system. An API may therefore be viewed as a "hook" into other software. Further an API typically comprises a set of standard software interrupts, call, and data formats that application programs use to initiate contact with network services, mainframe communications programs, telephone equipment or program to program communications.

The acronym JTAPI (JAVA™ Telephony Application Programming Interface) is used to refer to a portable, object-oriented application programming interface for JAVA™ based computer telephony applications. The presently used specification for JTAPI is v1.2 and was designed by a consortium of industry-leading companies. JTAPI serves a broad audience, from call center application developers to web page designers to smart web phones. JTAPI enables portable JAVA™ applications to setup, control, and tear down calls on a broad spectrum of host telephony platforms over public and private networks.

JTAPI compliant applications typically perform the following actions but not necessarily in the order listed. They need to obtain a reference to a provider. They investigate the call model objects available to the application. They determine the capabilities of relevant call model objects. Observers may be registered in the form of event handlers that will be notified of state changes in "interesting" call model objects. JTAPI format requests are made of the hardware. And calls are begun and ended.

These actions of the applications cause various objects to be generated and/or deleted in the JTAPI portion of the device or network. More detail relative to these objects and JTAPI in general may be obtained from many published sources such as over the internet from http//java.sun.com.

Each implementation of JTAPI is tailored to the needs of a particular product. A call center product may require a JTAPI implementation that uses an existing "standard" call control API (Application Programming Interface)such as TAPI from Microsoft Corp. A messaging product may require a JTAPI implementation that uses an existing "vendor-specific" call control interface such as Meridian Link from Northern Telecom Ltd. A mobile phone product may require a JTAPI implementation that uses the GSM (Global System for Mobile communications) protocol. Valuable resources and time must be allocated for the development of a JTAPI implementation for each product.

It has been determined that at least as much as 60% of the development code, in prior art APIs, has been allocated to the maintaining of the JTAPI call model with the remaining development allocated to the platform-specific code tailored to a particular protocol or switch.

Since the maintenance of the JTAPI call model may be identical in each implementation, it would be desirable to develop a JTAPI implementation that can take advantage of a proven call model code whereby development time and resource expenditures for a new product can be limited to platform specific code.

Further, when a plurality of different JTAPI implementations are individually designed by different programmers, the probability is raised of the occurrence of non-identical reaction of a given JTAPI implementation to a given application program event or call. It would thus further be desirable to more nearly standardize JTAPI implementation actions, reactions and events from the viewpoint of a JAVA™ telephony application hereinafter referred to as a JTAPI compliant application.

### SUMMARY OF THE INVENTION

The present invention is directed to a method and an apparatus for reducing the complexity of generating a hardware specific telephony programming interface in the JAVA™ high level language by using a multi-layer JTAPI implementation. This JTAPI implementation comprises at least a standardized generic layer for direct interaction with an application program and a hardware or platform specific adapter layer where the adapter layer is responsible for interacting directly with telephony hardware.

In accordance with one aspect of the invention, an apparatus includes a generic high level layer providing services and mechanisms for any of a plurality of JTAPI compliant applications. A platform specific low level layer interfaces call control requests and telephony hardware state information between said generic layer and a given platform.

In accordance with another aspect of the invention, a method includes a controller object, a JTAPI object and one or more lower level subclass objects created in response to receipt of an initializing call from a JTAPI compliant application.

Other aspects and features of the present invention will become apparent to those of ordinary skill in the art upon review of the following description of specific embodiments of the invention in conjunction with the accompanying figures.

### BRIEF DESCRIPTION OF THE DRAWINGS

For a more complete understanding of the present invention, and its advantages, reference will now be made in the following Detailed Description to the accompanying drawings, in which:
FIGURE 1 is a block flow diagram of a prior art approach to providing a JTAPI application to platform specific interface;
FIGURE 2 is a comparable block flow diagram of the present invention for providing a JTAPI application to platform specific interface;
FIGURE 3 provides more detail on the functional interaction of the adapter API of FIGURE 2;
FIGURE 4 provides more details as to numerous classes of software modules or objects that are in or may be generated in the generic layer of the invention and which under given conditions may cause sub-classes to be generated in the adapter layer; and
FIGURE 5 illustrates further classes of objects or modules of the generic layer which do not cause subclasses to be generated.

### DETAILED DESCRIPTION

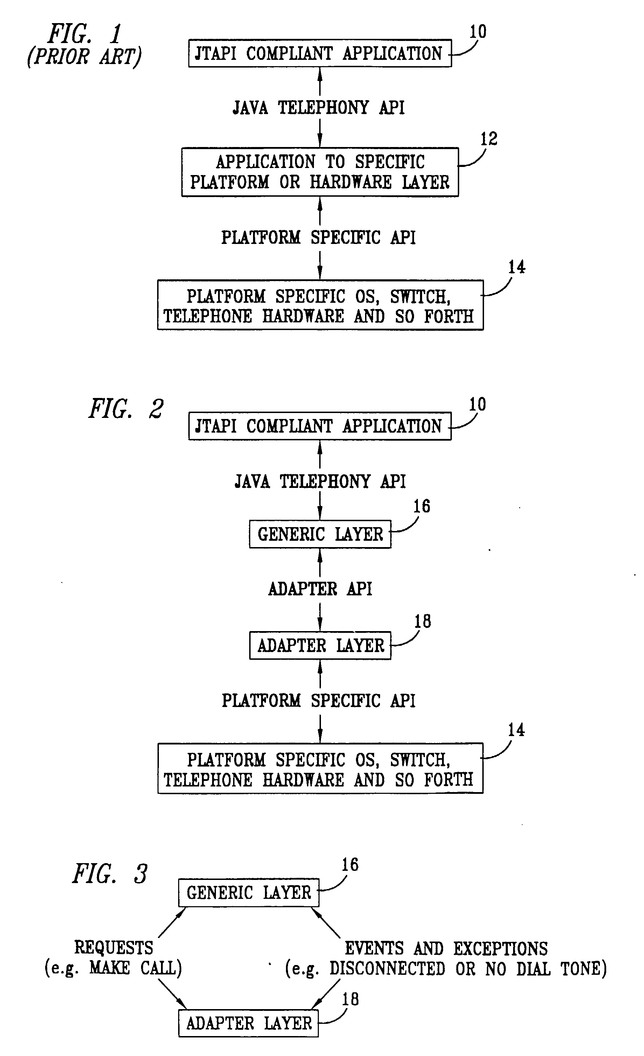

In FIGURE 1, a block 10 represents an application program, written in the JAVA™ language and conforming to the previously referenced JTAPI specification whereby it is JTAPI compliant. It should be noted that like objects or blocks in the various figures will be given identical designators. A block 12 comprises an application to specific platform or hardware layer of software. It may be designated as a "JTAPI" since it is an interface between block 10 and a block 14 representing specific hardware such as a switch, telephone hardware, an operating system and so forth. The term "platform" is to be considered interchangeable with the term "framework" for the remainder of this document. The interface between blocks 10 and 12 is commonly referred to as a Java™ telephony API while the interface between blocks 12 and 14 is referred to as platform specific API.

In FIGURE 2, the single block 12 of FIGURE 1 is divided into a generic layer 16 and an adapter layer 18 as shown. There is further illustrated an adapter API communication protocol between blocks 16 and 18. The block 16 represents a layer of software that may be standardized such that the source code remains unchanged for different applications 10 and any one of many specifically designed adapter layers 18.

As shown in FIGURE 3, the generic layer 16 typically sends requests to the adapter layer 18 and receives data and messages relating to events and exceptions caused by the operating system or specific hardware.

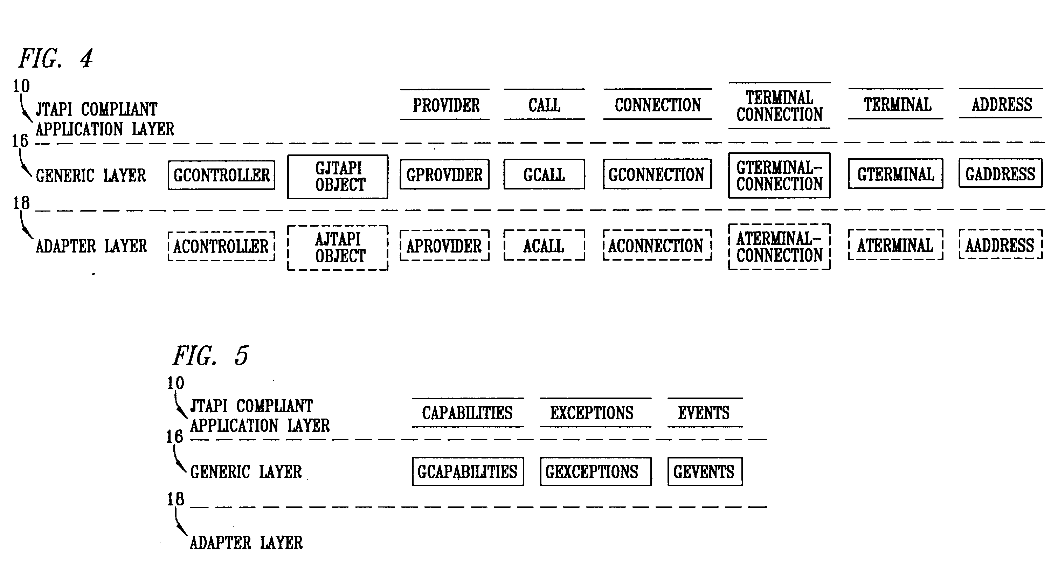

In FIGURE 4, an upper layer, generally designated as 10, represents the application program 10 and six call model interfaces defined in the referenced JTAPI specification. A first is a "provider". The provider acts as the "window" through which JTAPI applications see the telephony system. A second is a "call". The call comprises a dynamic "collection of logical and physical entities" that bring two or more endpoints together. A third notation is "connection". A connection comprises the dynamic relationship between a call and an address. A further notation is "terminal". A terminal defines a physical end-point such as a "phone set". Intermediate "connection" and "terminal" is "terminalconnection". TerminalConnection represents the dynamic relationship between a "connection" and a "terminal". Finally there is shown a notation of "address". In the JTAPI context, an address represents a logical end-point such as a "phone number".

A horizontal set of solid outline blocks generally designated as part of generic layer 16 represents some of the classes of objects generated as part of the JTAPI interface. The blocks corresponding call model interfaces are presented directly below the designated interface title. Two additional blocks are shown for a controller object and a JTAPI object. Each of the blocks in the generic layer includes the letter "G" as the first letter of the block designator to distinguish the class from subclasses of objects which might be generated in adapter layer 18. The adapter layer subclasses in FIGURE 4 are enclosed in dash outline blocks.

A presentation in FIGURE 5 is similar that of FIGURE 4 in that the upper layer 10 denotes additional interfaces and the generic layer 16 adds a "G" to the designation and encloses same in a solid line box to represent a class of objects generated in the JTAPI. However, no subclasses of the generic layer objects of FIGURE 5 are required in the adapter layer 18.

As implied above, the present invention comprises a multiple layered approach to the implementation of the Java Telephony Application Programming Interface (JTAPI). As shown, a high level layer 16, designated as the Generic Layer, provides services and mechanisms needed by all JTAPI peer implementations. Its job is to maintain the call model visible to applications through the JTAPI interface, and to dispatch application events upon state changes. The generic layer 16 passes call control requests to a low level layer 18, designated as the Adapter Layer, which is responsible for executing the low-level call control requests and reporting back to the generic layer 16 the changes in the state of the telephony hardware 14.

The JTAPI specification defines six call model interfaces (Provider, Call, Connection, TerminalConnection, Terminal and Address). These are implemented by appropriately named classes as shown in the Generic layer 16 of FIGURE 4. If a particular platform implementation needs to modify the behavior of any of these standardized call model objects, subclasses can be defined in the Adapter layer 18. However, the need to so modify the behavior of these call model objects is expected to be a rare occurrence.

The class "GController" in generic layer 16 handles complicated JTAPI requests by causing appropriate requests from Adapter layer 18 and updates the call model. In particular, methods in this class will effect changes in the state of call model objects in response to requests from JTAPI applications 10. The controller's behavior can also be modified, where necessary, through subclassing by the Adapter layer 18.

The GController class also implements many of the JTAPI call control methods, since these methods generally modify several different JTAPI objects. One example is a AdapterEvents class (not shown) that receives request notifications and telephony events from the adapter layer 18. This class generally updates JTAPI call states and queues events for later delivery to the observers defined in application layer 10. Another example is a GCallModelMgr class (not shown), which maintains all of the JTAPI call objects that are currently in use by the generic layer 16. It's tasks involve creating and disposing of call model objects, and actually delivering events to those object's observers in layer 10.

The adapter layer 18 defines a platform-independent interface to telephony hardware and services for use by the generic layer 16. Although it is object-oriented, its designed to be easily mapped into existing "flat" telephony APIs. This interface is designed to simplify the task of writing the adapter layer 18. The adapter layer 18 is primarily concerned with responding to requests from the generic layer 16, and corresponding telephony events reported back up to the generic layer 16 from block 14.

The various objects in adapter layer 18 map the API represented by the Adapter interface into the actual services provided by a particular platform. Each object in adapter layer 18 only needs to map the requests into the appropriate platform specific primitives. Thus, conceptually, the task of each object will be straightforward. The adapter layer thus acts to isolate the telephone or switch idiosyncrasies. Each JTAPI Peer implementation or application 10 will utilize a different adapter API implementation. Thus, the generic layer 16 and the adapter API between it and layer 18 will not need to be modified to work with different telephony hardware or operating systems.

As set forth in FIGURE 5, JTAPI also includes a large number of capability, event and exception objects. To help maintain consistency across various telephone systems, the generic layer 16 creates and maintains these objects. However, the capabilities of a particular telephone system must be properly mapped into JTAPI.

Capabilities, by their very nature, are tightly coupled to particular platform implementations. JTAPI defines both static (or provisioned) capabilities and dynamic (or active) capabilities. The generic layer 16 will implement these interfaces, but it will be very dependent on the support of adapter layer 18. Thus, the adapter API shown between layers 16 and 18 also has both static and dynamic capability requests. Most static capability methods are extremely simple. An example being just a return statement with a constant true or false Boolean. Dynamic capabilities need to take into account the current capabilities of the PBX (Private Branch Exchange) or telephone at the moment the capability is requested.

Exceptions and events are simple objects consisting mainly of data storage fields with accessor methods. They are implemented as part of the generic layer 16.

Since JTAPI software has been implemented previously in the style illustrated in FIGURE 1, it is believed that one skilled in the art can readily practice the present invention of separating the implementation into a standardized generic layer 16 and a specialized adapter layer 18 from the description provided above. However, the additional information below is provided to facilitate the design process of generic layer 16 runtime code.

In should be apparent that most of the "intelligence" of generic layer 16 is located in the GController and AdapterEvents classes. One of the responsibilities of these classes is to execute the multiple steps necessary to implement application JTAPI requests. This is primarily a matter of creating call model objects and stepping them through state transitions, along with making occasional requests to the Adapter layer to manipulate real telephone calls. Another responsibility is to process events reported by the Adapter layer. This also is primarily a matter of creating call model objects and stepping them through state transitions. Another responsibility is to maintain the mapping between the physical calls, terminals etc. manipulated by the Adapter layer and the corresponding JTAPI call model objects.

The call model objects (GProvider, GCall, GConnection, GAddress, GTerminalConnection and GTerminal) have somewhat different responsibilities. These objects must maintain the inter-relationship between objects that form the structure of the call model. They need to store the object state and effect changes commanded by GController. Further they need to generate events in response to changes in state, and distribute these events to the registered Observer objects in the application.

Multiple threads generally will be executing simultaneously in generic layer 16. Applications may consist of multiple threads, any of which may make JTAPI requests.

The adapter layer 18 must create at least one thread for asynchronously processing real-world occurrences. Event delivery to applications occurs in a separate generic layer thread. This separate thread will send out any queued events to the JTAPI applications. In this manner the call model is prevented from being stopped by a JTAPI application. Thus, Gcontroller in layer 16 does not send out any events, but queues them up for future delivery.

The adapter layer 18 may subclass any or all of the classes defined in the generic layer as set forth in connection with FIGURE 4. Actual object instances must instantiate the subclass. Thus, the generic layer 16 does not create call model objects itself, rather it delegates this task to adapter layer 18. This is done through an abstract method in GCallModelMgr. The type to be created is specified using a string, since in Java this is as efficient as using an integer code, and strings are more extensible. The value of the string should be the JTAPI core interface name of the desired object; i.e., "Call", "Connection", "Terminal", etc. Since the return type is "Object", the caller will cast it to the proper type. (The Java™ runtime will verify that the correct cast has been made.)

The adapter layer 18 creates call model objects. The constructors for these objects can take no parameters. Necessary object references and parameters are passed to newly-created objects after creation using known methods. If the adapter layer 18 has subclassed some objects of generic layer 16, it will need to check if the object that needs to be created should be a subclassed version. A switch statement or simple table may be used to achieve this.

Initialization of the entire JTAPI peer implementation (both generic and adapter layers 16 and 18 respectively) occurs as a result of the first application request. The first time any application calls, the generic layer 16 will create a GCallModelMgr object. This class is the "supervisor" of the generic layer 16, and there will only be one of these objects.

During initialization, the GCallModelMgr will cause new objects such as GController and AdapterEvents to be created and initialized. The GController will create and initialize an ATerminal object. The adapter layer 18 will then initialize itself and create any threads it needs. Next, the GController will ask the adapter layer 18 for a list of all available adapter layer Address objects so it can build an internal list of local JTAPI Addresses (and the local JTAPI Terminal). Finally GCallModelMgr will create a new GProvider object and return it to the Application.

JTAPI also needs to provide a shutdown method for applications to indicate that they no longer require telephony services, and that allocated resources can be released. Thus the generic layer 16 keeps a counter and when the last application indicates that it is shutting down, a message will be passed on to adapter layer 18 so it can free up resources.

In JTAPI, most events report changes to object states. Thus, the event queuing_mechanism in generic layer 16 is driven off the state variables in each event. A request method in GController changes the state through a call to a given object.

Each JTAPI event is a different class. The event generation code uses the new state value to select the proper class name. This is then instantiated through a call to GCallModelMgr, which in turn calls adapter layer 18. This action permits adapter layer 18 to subclass any of the event classes. In appropriate circumstances, the event creation path can be simplified.

The final part of event queuing is setting of the event fields. Events are delivered to the application in batches in accordance with the JTAPI specification. The events are queued within each call model object. Once the events are queued, the GController returns control back to the application. Later, a single call is made to GCallModelMgr. This initiates a method which walks through the call tree, asking each object to deliver its queued events to the application's Observer objects.

As noted above, multiple threads may be executing in generic layer 16 simultaneously. Several locks (as implemented by the Java runtime system) may be used to coordinate these threads. One lock oversees access to the event generation mechanism. To avoid inter-mixing of events generated by separate threads, this lock must be held until the event batch is complete. The lock is also used to insure that events are not delivered to the application while new events are being queued up.

Another lock may be used to oversee control of the call model. This lock must be acquired by any code that intends to make changes to the call model (object creation, state changes, or changes to object relationships). The lock must be held until all inter-related changes have been made.

On many occasions, both locks must be held at the same time. To prevent deadlocks between threads, the event generation lock must always be acquired before, and released after, the call model lock.

The adapter layer 18 comprises objects that are often referred to by generic layer 16 to process a request or correctly send an event. The objects of adapter layer 18 are stored in various generic layer objects, and also in a hashtable for easy access by generic layer 16. Adapter layer objects may become "stale" (i.e. invalid) after a while. The adapter layer 18 will send an event when this happens, and set a flag in the particular adapter object. The generic layer 16 will respond by "forgetting" about that adapter object (or getting a new one, where appropriate).

Since almost all JTAPI requests affect more than one call model object, request processing is desirably centralized in the GController class. Each request method begins by verifying that the call model is in the correct state, as specified by the JTAPI documentation.

A typical request method calls adapter layer 18 to actually perform the action requested by the application. Usually adapter layer 18 will need to send a request to some lower-layer protocol and wait for a response. During this time, adapter layer 18 will put itself (and the application that issued the request) to sleep. When the response comes back into an event-grabbing thread within adapter layer 18, the application's thread is "woke up" and control is returned to generic layer 16 where it will check for any errors from the request. If something unexpected happened, the adapter layer 18 sends an exception message, which is caught by GController and mapped into the appropriate JTAPI exception.

If the request of adapter layer 18 is completed successfully, the GController's request method proceeds to update the JTAPI call model to reflect what has already taken place. This involves acquiring the event generation and call model locks, and making appropriate calls to create and change the state of call model objects. Once all changes have been made, generic layer 16 unlocks the call model and returns control back to the application.

In JTAPI, a single real-world action can generate multiple events from a number of-call model objects. The specification includes a concept called "meta-events" to help the application identify related events. All events generated by the same action are labeled with the same "meta-code" attribute. Meta-events are assigned when the events are queued up, not when they are sent.

The generic layer 16 must include methods for management of these meta-codes. Each request method sets an appropriate meta-code value before making state changes. This code value is then picked up by the event generation routine in each call model object, and stored into one of the event's fields.

The Adapter layer calls one of these methods when its event processing thread determines that something "interesting" has happened. Typically this will happen on a thread, in the adapter layer 18, that is running independently of the generic layer 16 (and the application 10). Each method normally begins by mapping the Adapter object provided as a parameter into the corresponding JTAPI call model objects. The appropriate locks are then acquired, and the call model state is changed to reflect what happened. Finally, all generated events are queued for delivery to Observers in the application 10.

From the above, it may be ascertained the JTAPI of this invention comprises a standardized "generic" layer and a platform specific "adapter" layer with an appropriate standardized API intermediate these two layers. This approach minimizes time and effort in generating the JTAPI and reduces the "debugging" process in part by lessening the volume of code that could be contributing to any perceived problems.

Although the invention has been described with reference to a specific embodiment, these descriptions are not meant to be construed in a limiting sense. Various modifications of the disclosed embodiment, as well as alternative embodiments of the invention, will become apparent to persons skilled in the art upon reference to the description of the invention. It is therefore, contemplated that the claims will cover any such modifications or embodiments that fall within the true scope and spirit of the invention.

## Claims

1. A JTAPI (JAVA™ Telephony Application Programming Interface) implementation comprising:
a generic high level layer providing services and mechanisms for any of a plurality of JTAPI compliant applications; and
a platform specific low level layer for interfacing call control requests and telephony hardware state information between said generic layer and a given platform.

2. The JTAPI of claim 1 wherein the platform is an operating system in communication with telephony hardware.

3. The JTAPI of claim 1 wherein said generic layer maintains a call model visible to said JTAPI compliant application, dispatches application events upon state changes, passes call control requests on to said low level layer, and receives events notifying it of changes in the telephony hardware.

4. A telephony network comprising:
a plurality of JTAPI compliant application programs;
a plurality of hardware specific platforms; and
a plurality of JTAPIs (JAVA™ Telephony Application Programming Interface)s each having
a common generic layer communicating with one of said plurality of JTAPI compliant application programs and capable of interfacing with any other of said plurality of JTAPI compliant application programs, and
a hardware specific adapter layer, communicating with said generic layer and interfacing with one of said plurality of hardware specific platforms.

5. A generic JTAPI (JAVA™ Telephony Application Programming Interface) layer supporting a JTAPI compliant application comprising:
controller software;
JTAPI Object software; and
provider, call, connection, terminal-connection, terminal and address object call model interfaces.

6. The generic layer of claim 5 comprising, in addition:
logic for creating a supervisory object upon receipt of a first application request.

7. The generic layer of claim 5 comprising, in addition:
an initialization element for creating a supervisory object upon receipt of a first application request, the supervisory object then creating said provider object and said controller software.

8. The generic layer of claim 5 comprising, in addition:
tracking logic for informing the adapter layer that at least one accessing high level JTAPI compliant application no longer requires telephony services whereby a system resource may be freed.

9. A method of creating a generic JTAPI (JAVA™ Telephony Application Programming Interface) layer supporting a JTAPI compliant application comprising the steps of:
defining the creation of a single controller object;
defining the creation of predetermined JTAPI objects;
defining the creation of subclass objects in a lower level platform specific adapter layer; and
creating the controller object and appropriate ones of provider, call, connection, terminalconnection, terminal and address classes and subclasses of objects in response to receipt of an initializing call from a JTAPI compliant application.

10. A method of creating a generic JTAPI (JAVA™ Telephony Application Programming Interface) layer supporting a JTAPI compliant application comprising the steps of:
creating a single controller object;
creating predetermined JTAPI objects; and
creating subclass objects in a lower level platform specific adapter layer,
the creation of the controller object and
appropriate ones of provider, call, connection, terminal-connection, terminal and address classes and subclasses of objects occurring in response to receipt of an initializing call from a JTAPI compliant application.

11. The method of claim 10 comprising the additional step of:
maintaining an accounting of JTAPI compliant applications presently requiring servicing; and
informing a lower level adapter layer when all previously accessing high level JTAPI compliant applications no longer require telephony services whereby system resources may be freed.
